**Europäisches Patentamt**

**European Patent Office**

**Office européen des brevets**

(19)

(11) Veröffentlichungsnummer : **0 065 773
B1**

(12) **EUROPÄISCHE PATENTSCHRIFT**

(45) Veröffentlichungstag der Patentschrift :
07.05.86

(51) Int. Cl.⁴ : **B 23 B 29/24**

(21) Anmeldenummer : **82104479.9**

(22) Anmeldetag : **21.05.82**

(54) Selbstöffnender Drehkopf.

(30) Priorität : **22.05.81 DE 3120365**

(43) Veröffentlichungstag der Anmeldung :
**01.12.82 Patentblatt 82/48**

(45) Bekanntmachung des Hinweises auf die Patenterteilung : **07.05.86 Patentblatt 86/19**

(84) Benannte Vertragsstaaten :
**CH FR GB IT LI SE**

(56) Entgegenhaltungen :
**DE-A- 2 140 455
DE-C- 114 891
DE-C- 170 038
DE-C- 727 900
GB-A- 2 014 498
US-A- 2 416 774
US-A- 3 581 612**

(73) Patentinhaber : **Gustav Wagner Maschinenfabrik
Opfersteinstrasse 11
D-7410 Reutlingen (DE)**

(72) Erfinder : **Beck, Heinz
Frauenstrasse 20
D-7410 Reutlingen (DE)**
Erfinder : **Merkle, Werner
Obere Strasse 9
D-7403 Ammerbuch 1 (DE)**
Erfinder : **Mückl, Peter
Hagenweg 61/1
D-7410 Reutlingen 17 (DE)**
Erfinder : **Pflugbeil, Rüdiger
Egertstrasse 60
D-7410 Reutlingen 24 (DE)**
Erfinder : **Pill, Josef
Hochdorferstrasse 3
D-7410 Reutlingen 24 (DE)**
Erfinder : **Seifert, Jürgen
Mahdachstrasse 6
D-7413 Gomaringen (DE)**
Erfinder : **Stichler, Bernd
J.-F.-Weishaar-Strasse 37
D-7054 Korb (DE)**

(74) Vertreter : **Reinländer & Bernhardt Patentanwälte
Orthstrasse 12
D-8000 München 60 (DE)**

**Beschreibung**

Die Erfindung betrifft einen selbstöffnenden Drehkopf nach dem Oberbegriff des Anspruchs 1.

Drehköpfe dieser Art sind in mannigfaltigen konstruktiven Ausführungen bekannt und sind in den meisten Fällen aus selbstöffnenden Gewindeschneidköpfen dadurch hervorgegangen, daß die dort verwendeten Gewindestrehler durch entsprechend ausgebildete, zumeist mit Hartmetall bestückte Drehstähle ersetzt worden sind.

Da es sich hierbei zumeist um tangential angeordnete Stähle oder Messer handelt, sind sie in um Drehpunkte schwenkbar angeordnete Halter eingebaut, die sich beispielsweise an mit archimedischen Spiralen ausgestatteten Kurvenringen abstützen, durch deren Drehung die Halter auf entsprechende Drehdurchmesser eingestellt werden können.

Die Schwenkbarkeit um einen Drehpunkt zwingt dazu, die Tangentialwerkzeuge « über Mitte », also über den theoretischen Tangentenpunkt hinaus, um ein paar zehntel Millimeter vorzustellen, damit die Werkzeugschneiden nicht in das Werkstück hineingezogen werden können. Dieses Vorstellen über Mitte ist aber für eine Drehoperation äußerst ungünstig. Vielmehr wird eine Einstellung der Werkzeugschneiden genau auf Mitte bzw. leicht « unter Mitte » verlangt, wie es bei jeder Drehoperation üblich ist.

Des weiteren werden Drehköpfe mit einstellbaren, dann aber feststehenden Messern eingesetzt, die sich zwar bei ebenfalls kleinen Baumaßen, wie sie zum Einsatz auf den eingangs erwähnten Automaten gefordert werden, durch hervorragende Steifigkeit auszeichnen und mit denen Werkstücke in sehr engen Toleranzen gefertigt werden können. Diese nicht selbstöffnenden Drehköpfe weisen aber den entscheidenden Nachteil auf, daß ihre vier Schneiden beim schnellen Rückzug von der Bearbeitungsstelle vier entsprechend steile Schneidspuren auf der zuvor sauber gedrehten Fläche hinterlassen.

Es ist auch ein nicht rotierender Drehkopf bekannt, bei dem an der Vorderfläche des Grundkörpers Schieber vorgesehen sind, welche die Werkzeugträger halten, und bei dem die Werkzeugträger durch Kurvenstücke eines Kurvenrings radial zustellbar sind (GB-A-2 014 988).

Die Aufgabe der Erfindung besteht darin, einen selbstöffnenden Drehkopf nach dem Oberbegriff des Anspruchs 1 zu schaffen, der trotz kleiner Baumaße und großem Arbeitsbereich eine hohe Steifigkeit aufweist. Gelöst wird diese Aufgabe durch die Merkmale des Kennzeichens des Anspruchs 1. Weiterbildungen der Erfindung sind in den Unteransprüchen angegeben.

Die gemäß einer Ausführung der Erfindung radiale Zustellung der vier Werkzeugträger durch vier archimedische Spiralkurvenstücke beträgt jeweils nur etwas mehr als einen Millimeter. Dabei wird an den archimedischen Spiralkurvenstücken nur die Feineinstellung vorgenommen, während die Grobverstellung der Werkzeugträger innerhalb des radialen Arbeitsbereichs in Verbindung mit den flachen Schiebern in Verzahnungen mit Einmillimeterteilung sowie mittels Schrauben in Langlöchern erfolgt.

Um den radial verstellbaren Werkzeugträgern eine hohe Steifigkeit und große Führungsgenauigkeit zu verleihen, sind gemäß einer Ausführung der Erfindung einige Millimeter hinter der Vorderfläche des Drehkopfs die vier Radialbohrungen in 90°-Teilung angeordnet, die in der Mitte ihres Umfangs nach der Vorderfläche hin durch radialkoaxiale Schlitze in der Breite des beispielsweise halben Bohrungsdurchmessers angeschnitten sind. Durch diese Durchbrüche greifen die Ansätze der flachen Schieber, die in diesen Durchbrüchen in engen Toleranzen und im üblichen Verhältnis von Breite zu Länge gleich 1 : 2,5 geführt sind. In den Radialbohrungen gleiten die runden Führungsbolzuen, die in koaxialen Bohrungen Druckfedern aufnehmen, die sich alle vier an der Zentralbüchse abstützen und damit die Führungsbolzen gegen vier archimedische Spiralkurvenstücke drücken. Die Führungsbolzen sind entsprechend den Schlitzbreiten für die Ansätze der flachen Schieber abgeflacht und über Verzahnungen und Schrauben mit diesen verbunden. Dabei sind die flachen Schieber im Rahmen der freien 90°-Sektoren vor dem Drehkopf flächig ausgebildet, so daß die auf diesen Schiebern aufgesetzten Werkzeugträger in Verbindung mit den Führungsbolzen eine sehr hohe Standfestigkeit erhalten.

In der Zeichnung ist eine beispielhafte Ausführungsform der Erfindung dargestellt und näher erläutert, und zwar sind

Figur 1 ein Längsschnitt durch den erfindungsgemäßen Drehkopf,

Figur 2 ein Schnitt entlang der Linie I-I in Fig. 1 und

Figur 3 ein Teilschnitt entlang der Linie II-II in Fig. 2.

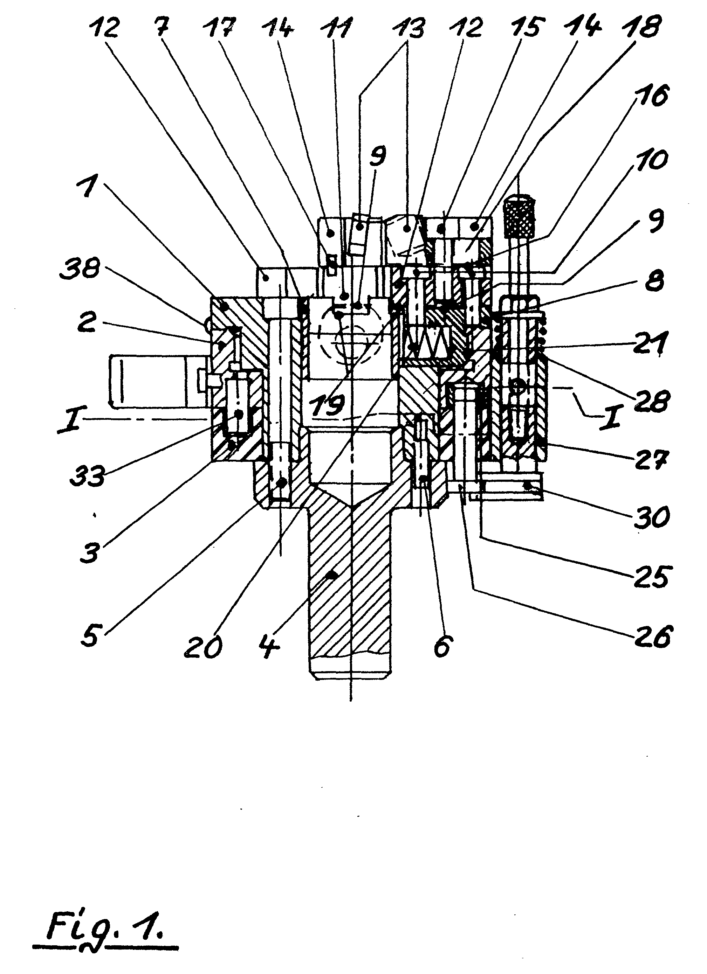

Gemäß Fig. 1 ist der Grundkörper 1 mit dem Kurvenring 2 und dem Stellring 3 am Schaft 4 mit vier Schrauben 5 verschraubt und mit dem Gewindestift 6 fixiert. Im Grundkörper 1 ist mit seiner Vorderfläche bündig die Zentralbüchse 7 eingepreßt. Weiterhin sind im Grundkörper 1 im Winkelabstand von je 90° in entsprechenden koaxial nach vorn aufgeschlitzten Radialbohrungen die Führungsbolzen 8 aufgenommen, die über Querverzahnungen 9 mittels zweier Schrauben 10 an den Ansätzen 11 der Schieber 12 verschraubt sind. Die Wendeplatten 13 tragenden Werkzeugträger 14 sind mittels Schrauben 15 in Querverzahnungen 16 radial und durch Gleitfedern 17 quer dazu für radiale Nachsetzbarkeit in Langlöchern 18 gehalten. Die Schieber 12 durchgreifen zwecks Abdichtung mit ihren Nasen 19 die Zentralbüchse 7. In Bohrungen der Führungsbolzen 8 liegen die Druckfedern 20, die unter Abstützung an der Zentralbüchse 7 die Führungsbolzen 8 mit den Schiebern 12 und den Werkzeugträgern 14 nach außen bis zur Anlage an den archimedischen Spiralkurvenstücken 21 des Kurvenrings 2 drücken.

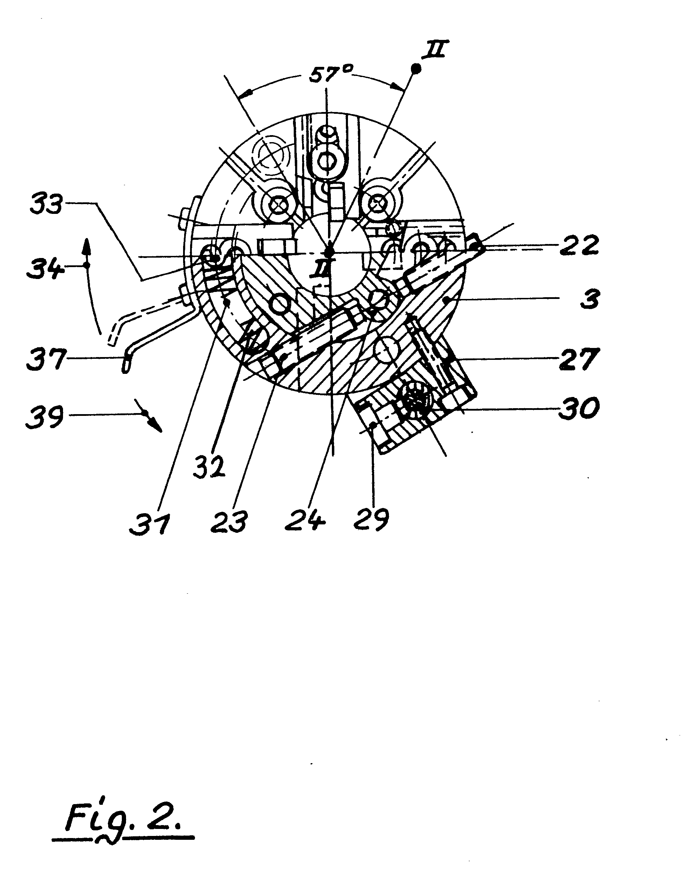

Gemäß Fig. 2 in Verbindung mit Fig. 1 kann der Stellring 3 über seine Einstellgewindestifte 22 und 23 an der Nase 24 des mit dem Schaft 4 feststehenden Grundkörpers 1 drehverstellt werden. Diese Drehverstellung wird über den in der Buchse 25 (Fig. 1) eingreifenden Arretierstift 26 auf den Kurvenring 2 übertragen, wodurch sich die radiale Stellung der Werkzeugträger 14 entsprechend verändert.

In dem am Stellring 3 verschraubten Lagerbock 27 ist durch die Druckfeder 28 rückstellbar und an der Schraube 29 hubbegrenzt der Ausrücker 30 gelagert. Mit seiner Hilfe kann am Ende einer Zerspanungsoperation der Arretierstift 26 aus der Büchse 25 gezogen werden, wodurch die in der Bogennut 31 des Stellrings 3 untergebrachte Druckfeder 32 über den Stift 33 den Kurvenring 2 in Richtung des Pfeils 34 dreht, was ein Abheben der Werkzeughalter vom Werkstück bewirkt.

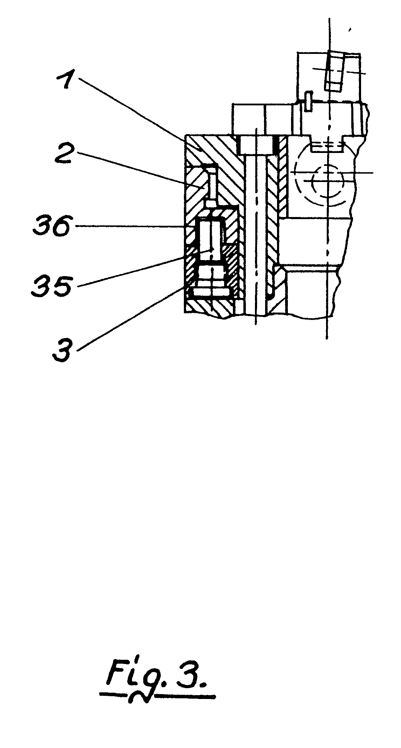

Der gemäß Fig. 3 in den Stellring 3 eingeschraubte Anschlagstift 35 greift im Kurvenring 2 in eine kleinwinklige Bogennut 36, die so den zuvor beschriebenen Öffnungshub begrenzt.

Am Schließhebel 37 (Fig. 1) kann der Kurvenring 2 wieder in Richtung des Pfeils 39 in die Bearbeitungsposition zurückgedreht werden, bis der Arretierstift 26 wieder in die Büchse 25 einspringt.

Für eine Grobverstellung des Kurvenrings 2 auf einen entsprechenden Bearbeitungsdurchmesser der Werkzeugträger ist an der Stelle 38 eine Einstellskala mit gegenüberliegender Strichmarke eingraviert.

**Patentansprüche**

1. Selbstöffnender Drehkopf kleiner Bauart zur Verwendung auf schnellaufenden, vorzugsweise mehrspindeligen Automaten mit auf den Bearbeitungsdurchmesser einstellbaren Werkzeugträgern (14), mit flachen Schiebern (12) an der Vorderfläche des Grundkörpers (1) des Drehkopfs, welche die Werkzeugträger halten, wobei die Werkzeugträger durch Kurvenstücke (21) eines Kurvenrings (2) radial zustellbar sind, dadurch gekennzeichnet, daß in Radialbohrungen des Grundkörpers Führungsbolzen (8) gleitbar gelagert sind, die mit den Schiebern (12) verbunden sind, und daß die Werkzeugträger (14) über Querverzahnungen (16) an den Schiebern (12) gehalten sind.

2. Drehkopf nach Anspruch 1, dadurch gekennzeichnet, daß die Radialbohrungen mittels Durchbrüchen an der Vorderfläche des Grundkörpers (1) des Drehkopfs verbunden sind und daß Ansätze (11) der Schieber die Durchbrüche durchgreifen.

3. Drehkopf nach Anspruch 1 oder 2, dadurch gekennzeichnet, daß die flachen Schieber (12) und die Führungsbolzen (8) in einem Winkelabstand von 90° angeordnet sind.

4. Drehkopf nach einem der Ansprüche 1 bis 3, dadurch gekennzeichnet, daß die Führungsbolzen (8) mit den Schiebern (12) über feinteilige Verzahnungen (9) verschraubt sind.

5. Drehkopf nach Anspruch 1 oder 2, dadurch gekennzeichnet, daß die Schieber (12) mit Nasen (19) in entsprechende Aussparungen der Wandung einer Zentralbüchse (7) eindringen, die im Grundkörper (1) des Drehkopfs bündig mit der Vorderfläche eingepreßt ist.

**Claims**

1. A self opening turning head of a compact construction for the use on fast running, preferrably multi-spindle automatic machines having tool supports (14) adjustable to the machining diameter, having flat slides (12) on the front face of the basic body (1) of the turning head which hold the tool supports, wherein the tool supports can be radially fed by curved pieces (21) of a curved ring (2), characterized in that, in radial bores of the basic body, guide bolts (8) are supported slidably which are connected with the slides (12), and that the tool supports (14) are held at the slides via a transverse toothing.

2. A turning head according to claim 1, characterized in that the radial bores are connected by means of openings at the front face of the basic body (1) of the turning head, and that projections (11) of the slides pass through the openings.

3. A turning head according to claim 1 or 2, characterized in that the flat slides (12) and the guide bolts (8) are provided in an angular distance of 90°.

4. A turning head according to one of the claims 1 to 3, characterized in that the guide bolts (8) are screwed with the slides (12) via a fine graduated toothing (9).

5. A turning head according to claim 1 or 2, characterized in that the slides (12) enter with cams (19) into corresponding recesses of the wall of a central sleeve (7) which is pressed flush with its front face in the basic body (1) of the turning head.

**Revendications**

1. Tête de tournage à ouverture automatique et de type compact qui, destinée à être utilisée sur des tours automatiques, de préférence multibroches, fonctionnant à vitesse élevée, est équipée de porte-outils (14) réglables en ce qui concerne le diamètre d'usinage, de coulisseaux plats (12) montés sur la face frontale de l'élément de base (1) de la tête de tournage et qui maintiennent les porte-outils, ces derniers pouvant être avancés radialement par des parties incurvées (21) d'une bague formant came (2), caractérisée en ce que dans des alésages radiaux de l'élément de base sont montées de façon à pouvoir coulisser des broches de guidage (8) qui sont reliées aux coulisseaux (12) et en ce que les porte-outils (14) sont retenus sur les coulisseaux (12) par l'intermédiaire de dentures transversales (16).

2. Tête de tournage selon la revendication 1, caractérisée en ce que les alésages radiaux communiquent au moyen de passages avec la face frontale de l'élément de base (1) de la tête de tournage et en ce que des saillies (11) des coulisseaux passent par les passages.

3. Tête de tournage selon la revendication 1 ou 2, caractérisée en ce que les coulisseaux plats (12) et les broches de guidage (8) sont disposés à des intervalles angulaires de 90°.

4. Tête de tournage selon l'une quelconque des revendications précédentes, caractérisée en ce que les broches de guidage (8) et les coulisseaux (12) s'engrènent par l'intermédiaire de dentures (9) à pas fin.

5. Tête de tournage selon la revendication 1 ou 2, caractérisée en ce que les coulisseaux (12) pénètrent avec des nez (19) dans des évidements correspondants de la paroi d'une douille centrale (7) qui est emmanchée dans l'élément de base (1) de la tête de tournage au ras de la face frontale.

Fig. 1.

**Fig. 2.**

*Fig. 3.*